# EUROPEAN PATENT APPLICATION

(11) **EP 4 378 719 A2**
(43) Date of publication of application: **05.06.2024**
(21) Application number: 23212221.8
(22) Date of filing: 27.11.2023
(51) Int. Cl.: B60G 13/16, F16F 7/104

(54) **ACTIVE SUSPENSION SYSTEM**

(30) Priority: 29.11.2022 US 202263385251 P
(71) Applicant: Apple Inc., Cupertino, CA 95014 (US)
(72) Inventor: ERRICO, Nicholas J., Cupertino, California, 95014 (US); SHAWKI, Islam M., Cupertino, California, 95014 (US); DAWSON, Jacob L., Cupertino, California, 95014 (US)
(74) Representative: Simmons & Simmons

(57) **Abstract**

An active suspension system, comprising:
a wheel support (106) coupled to a wheel (110) of a vehicle;
an active suspension component (108) coupled to the wheel support (106); and
a damper mass (222) coupled to the wheel support (106) and configured to move relative to the wheel support (106) in response to movement of the wheel support (106),
wherein a motion of the wheel (110) is limited based on a position of the damper mass (222) relative to the wheel (110).

## Description

### CROSS-REFERENCE TO RELATED APPLICATIONS

This application claims the benefit of United States Provisional Application No. 63/385,251, filed on November 29, 2022, the contents of which are hereby incorporated by reference in its entirety for all purposes.

### FIELD

The present disclosure relates generally to the field of position sensors.

### BACKGROUND

A damping mass can be used to limit movement of a first structure relative to a second structure in response to an external force that induces motion of the first structure or the second structure.

### SUMMARY

One aspect of the disclosure is a position sensing system that includes a wire coil coupled to a wheel support that is coupled to a wheel of a vehicle and is located opposite a target. An inductance of the wire coil is configured to change in response to movement of the target relative to the wire coil, and a position of the target relative to the wheel support is determined based on the inductance of the wire coil.

Another aspect of the disclosure is a damper mass position sensing system that includes a damper mass coupled to a wheel support that is coupled to a vehicle. The damper mass is configured to move relative to the wheel support in response to movement of the wheel support. A sensor is coupled to the wheel support and is configured to generate a signal based on the movement of the damper mass relative to the wheel support. A position of the damper mass is determined based on the signal, and a motion of a wheel that is coupled to the wheel support is limited based on the position of the damper mass.

Yet another aspect of the disclosure is an active suspension system that includes a wheel support coupled to a wheel of a vehicle and an active suspension component coupled to the wheel support. A damper mass is coupled to the wheel support and is configured to move relative to the wheel support in response to movement of the wheel support. A motion of the wheel is limited based on a position of the damper mass relative to the wheel.

### BRIEF DESCRIPTION OF THE DRAWINGS

FIG. 1 is an illustration of a top view of a vehicle.
FIG. 2 is an illustration of a wheel support of the vehicle of FIG. 1.
FIGS. 3-4 are illustrations of a position sensor and an embodiment of a target.
FIGS. 5-6 are illustrations of the position sensor and another embodiment of a target.
FIGS. 7-9 are illustrations of another embodiment of the position sensor.
FIG. 10 is an illustration of a controller of the vehicle of FIG. 1.

### DETAILED DESCRIPTION

The disclosure herein relates to position sensors and damping motion of a wheel relative to a vehicle. In some instances, a vehicle may include a damper mass (e.g., a tuned mass damper) coupled to the wheel to limit motion of the wheel in response to a road surface disturbance such as a bump, pothole, irregular or uneven surfaces, etc. The damper mass may be configured to move in a direction that is opposite the direction of motion of the wheel. By such movement, the damper mass may be configured to reduce incidence of unwanted wheel motions, such as wheel hop.

Embodiments disclosed herein are directed to a position sensor that is configured to sense a position of a damper mass relative to a wheel. The damper mass may include a target that moves in unison with the damper mass such that a change in inductance is induced in the position sensor as the target moves relative to the sensor. The sensor may also be configured to sense a gap between sensor and the target. Based on the longitudinal position of the damper mass relative to the wheel and the gap, an active suspension system is configured to limit motion of the wheel.

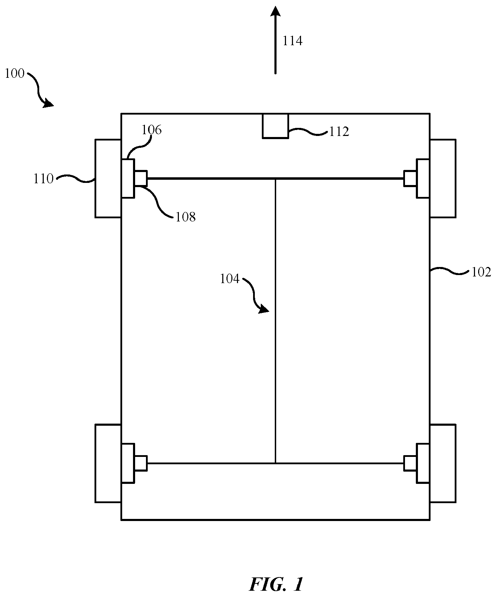

FIG. 1 is an illustration of a top view of a vehicle 100. The vehicle 100 can be any type of vehicle that travels on a road including, but not limited to, gas or diesel-powered vehicles, electric vehicles, remote-controlled vehicles, autonomous vehicles, etc. The vehicle 100 is shown to include a body 102. The body 102 may include the exterior structure of the vehicle 100 (e.g., exterior panels, chassis, etc.) and any additional structures or features within the exterior structure (e.g., the cabin of the vehicle 100, the engine system, the heating/cooling system, etc.). The vehicle 100 also includes a wheel 110 that is configured to contact the road surface (either directly or indirectly via, for example, a tire) on which the vehicle 100 travels (e.g., in a direction of travel 114) and to support the weight of the vehicle 100. Though only the wheel 110 is described, the vehicle 100 may include additional wheels and associated wheel supports. As shown in FIG. 1, the vehicle 100 may include four wheels, each with an associated wheel support. In some implementations, the vehicle 100 includes more or fewer wheels, each with an associated wheel support.

The vehicle 100 also includes a wheel support 106 coupled to the wheel 110. The wheel support 106 is configured to support the wheel 110 with respect to the body 102. The wheel support 106 is coupled to the wheel 110 in a manner that allows rotation of the wheel 110 with respect to the wheel support 106, such as by a hub. In some implementations, the wheel support 106 is configured to turn (e.g., steer) the wheel 110 in response to an input (e.g., from an occupant and/or a command from the vehicle 100 if the vehicle 100 is an autonomous vehicle) to change the direction of travel 114 of the vehicle 100.

The vehicle 100 is also shown to include an active suspension system 104 that is coupled to the wheel support 106. The active suspension system 104 is configured to support the body 102 with respect to the wheel support 106. The active suspension system 104 may include hydraulic components configured to support the body 102 via a hydraulic pressure. The active suspension system 104 may also include pneumatic components configured to support the body 102 via a pneumatic pressure. In some implementations, the active suspension system 104 may include a compressor that is configured to compress air from the external environment. The compressor may be configured to store the compressed air and direct the compressed air to a reservoir to store the compressed air.

The active suspension system 104 also includes an active suspension component 108 that is coupled to the wheel support 106. The active suspension component 108 is configured to increase or decrease relative motion between the wheel support 106 and the body 102. For example, the active suspension component 108 may include a hydraulic actuator where a pressure of hydraulic fluid in the hydraulic actuator is increased or decreased to increase or decrease relative motion between the wheel support 106 and the body 102. The active suspension component 108 may also include an electric actuator (e.g., a ball screw actuator) that can be configured to increase or decrease relative motion between the wheel support 106 and the body 102. As another example, the active suspension component 108 may include an air spring, and the compressor may increase or decrease an air pressure in the air spring to increase or decrease relative motion between the wheel support 106 and the body 102. For example, as the stiffness of the active suspension component 108 increases, there is less relative motion between the wheel support 106 and the body 102. In contrast, as the stiffness of the active suspension component 108 decreases, there is more relative motion between the wheel support 106 and the body 102.

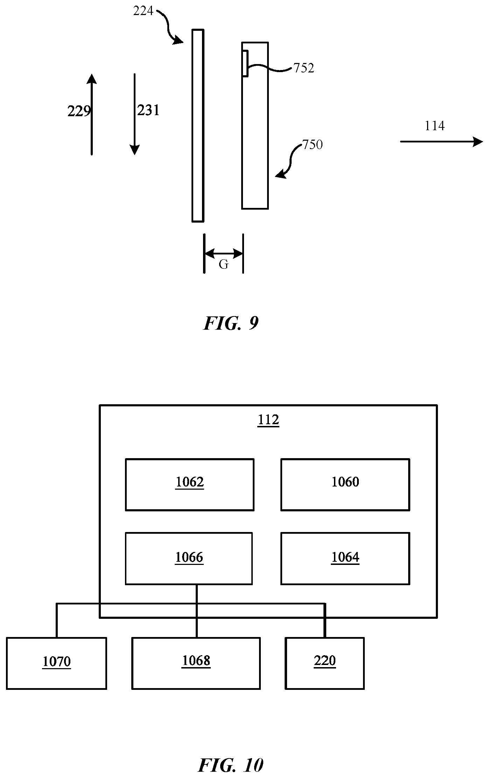

The vehicle 100 is also shown to include a controller 112. The controller 112 is in electrical communication with the wheel support 106 and the active suspension system 104 (including components of the active suspension system 104 such as the active suspension component 108) and is configured to communicate with the active suspension system 104 to increase and/or decrease a stiffness of the active suspension component 108. The structure and additional functions of the controller 112 are further described with reference to FIG. 10.

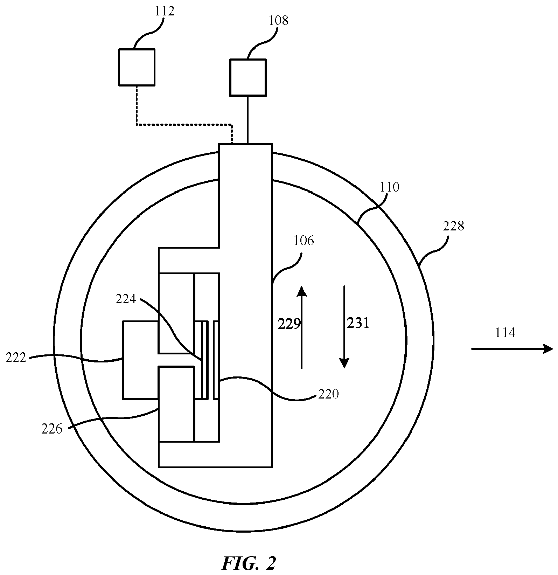

FIG. 2 is an illustration of the wheel support 106 of the vehicle 100 of FIG. 1. The wheel support 106 is coupled to the wheel 110 of the vehicle 100. The wheel 110 is at least partially surrounded by a tire 228 and supported by pressurized air between an outer surface of the wheel 110 and an inner surface of the tire 228. The tire 228 may include a resilient material that is configured to deform in response to an external force (e.g., a bump, pothole, uneven surface such as gravel or brick, etc.).

The wheel support 106 also includes a damper mass 222 that is coupled to the wheel support 106 and is configured to move relative to the wheel support 106 in response to movement of the wheel support 106. In some implementations, the damper mass 222 is coupled to the wheel support 106 via a spring-damper 226. The spring-damper 226 may include both a spring and a damper (e.g., a hydraulic piston/cylinder assembly) that is configured to oppose motion of the damper mass 222. For example, the damper mass 222 is supported by the spring so that it may move in two directions (e.g., both upward and downward) relative to a neutral (e.g., equilibrium) position. The damper is configured to resist motion of the damper mass 222 both toward and away from the neutral position, thereby damping motion of the damper mass 222. The damper mass 222 is configured to oppose motion of the wheel support 106 to limit motion of the wheel support 106 associated with a disturbance (e.g., bump, pothole, uneven surface such as gravel or brick, etc.) on a road surface on which the vehicle 100 is traveling. For example, in a reference frame defined by the wheel support 106, when the tire 228 encounters a bump on the road surface, the tire 228 and the wheel support 106 move in a direction away from the bump (e.g., in a direction indicated by the arrow 229) while the damper mass 222 moves toward the bump relative to the wheel support 106 (e.g., in a direction indicated by the arrow 231). When viewed from the reference frame of the bump on the road surface, the damper mass 222 moves away from the bump at a slower rate than the rate at which the wheel support 106 moves away from the bump.

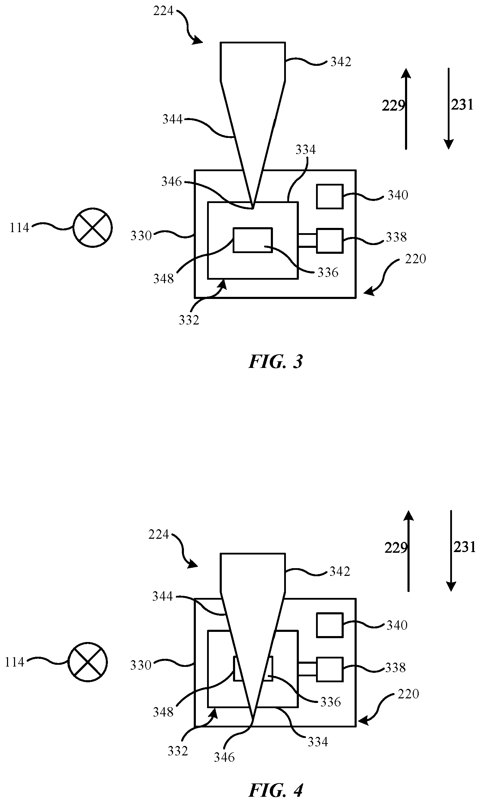

The wheel support 106 is shown to include a position sensor 220 that is coupled to the wheel support 106 and is configured to generate a signal based on movement of the damper mass 222 relative to the wheel support 106. The controller 112 is in electrical communication with the position sensor 220 and is configured to receive the signal and determine motion (e.g., position, velocity, and/or acceleration) of the wheel support 106. In some implementations, the position sensor 220 may be an inductive sensor. In such implementations, the position sensor 220 is fixed to the wheel support 106 and is configured such that movement of the damper mass 222 relative to the wheel support 106 induces a change in inductance of the position sensor 220. A magnitude of the inductance of the position sensor 220 is indicative of the position of the damper mass 222 relative to the position sensor 220. In some implementations, a time derivative of the inductance of the position sensor 220 is indicative of the velocity of the damper mass 222 relative to the wheel support 106 and/or the acceleration of the damper mass 222 relative to the wheel support 106. Accordingly, the signal generated by the position sensor 220 may also be based on the acceleration of the damper mass 222 relative to the wheel support 106, the velocity of the damper mass 222 relative to the wheel support 106, or a combination thereof. The position sensor 220 may also include other types of sensors such as magnetic, capacitive, ultrasonic, optical, and contact based. The position sensor 220 is further described with reference to FIGS. 3-6.

In some implementations, the damper mass 222 includes a target 224 coupled to the damper mass 222 and configured to move in unison with the damper mass 222. The target 224 may include a different material than the damper mass 222 such that the target 224 is configured to induce a change in inductance in the position sensor 220 as the damper mass 222 moves relative to the sensor 230. For example, the damper mass 222 may include a dense material (e.g., iron) that provides enough weight to stabilize the wheel support 106, but may not have enough conductivity to generate eddy currents on a surface of the target 224 that are sufficient to materially change the inductance in the position sensor 220. In such implementations, the target 224 may include a material (e.g., aluminum) that is more conductive than the material of the damper mass 222.

FIGS. 3-4 are illustrations of the position sensor 220 and an embodiment of the target 224. FIG. 3 is an illustration of the position sensor 220 and the target 224 at a first end stop position. FIG. 4 is an illustration of the position sensor 220 and the target 224 at a second end stop position. The position sensor 220 is shown to include a mounting surface 330 that is coupled to the wheel support 106. The mounting surface 330 may be any surface to which electrical components may be mounted. For example, the mounting surface 330 may be a printed circuit board. The position sensor 220 also includes a wire coil 332 that is positioned on the mounting surface 330 (and is therefore coupled to the wheel support 106). The wire coil 332 includes an outer wire 334 and an inner wire 348. In some implementations, the outer wire 334 and the inner wire 348 are portions of the same wire that is wound around itself. The outer wire 334 and the inner wire 348 may also be separate wires that are electrically coupled to each other via the mounting surface 330 or additional electrical connections. The wire coil 332 may also include one or more additional wires positioned between the outer wire 334 and the inner wire 348. The inner wire 348 defines a central portion 336 of the wire coil 332 that is located approximately at the center of the wire coil 332.

The wire coil 332 may be an inductor and may be coupled in parallel with a capacitor 338, thereby creating an LC circuit where an electrical current oscillates between the wire coil 332 and the capacitor 338. Inductance of the wire coil 332 may change based on proximity of a conductor to the wire coil 332. For example, as a conductor moves relative to the wire coil 332, the inductance of the wire coil 332 changes according to Lenz's law. More specifically, the inductance of the wire coil 332 generates a magnetic field in the area around the wire coil 332. When a conductor is positioned opposite the wire coil 332 and moves across the wire coil 332, eddy currents form on the surface of the conductor. The inductance of the wire coil 332 changes based on a magnetic field that opposes the magnetic field from the wire coil 332. Accordingly, the inductance of the wire coil 332 is related to the position of the conductor relative to the wire coil 332, and the position of the conductor relative to the wire coil 332 can be determined based on the inductance of the wire coil 332. A signal generated by the position sensor 220 may be based on the inductance of the wire coil 332. The signal generated by the position sensor 220 is sent to the controller 112, which is in electrical communication with the wire coil 332. Accordingly, the position sensor 220 and the controller 112 may form a position sensing system.

In some implementations, the capacitor 338 is configured to store an electrical charge generated by an electrical current flowing through the wire coil 332. The electrical charge stored by the capacitor 338 is proportional to the magnitude of the electrical current flowing through the wire coil 332. Accordingly, a signal generated by the position sensor 220 may be based on the magnitude of the current flowing through the wire coil 332, the magnitude of the electrical charge stored by the capacitor 338, a change in the magnitude of the current flowing through the wire coil 332, a change in the magnitude of the electrical change stored by the capacitor 338, or a combination thereof.

The position sensor 220 is also shown to include an accelerometer 340 that is configured to generate a signal indicative of the acceleration of the wheel support 106. In some implementations, the accelerometer 340 is coupled to the mounting surface 330. The accelerometer 340 may also be coupled to the wheel support 106.

The target 224 is shown to include an upper portion 342 and a lower portion 344 extending from the upper portion 342. The lower portion 344 terminates at a tip 346 that is located at an end of the target 224. The lower portion 344 is shown to include a geometric shape that may include a triangle. As shown in FIGS. 3-4, the geometric shape of the lower portion 344 is an isosceles triangle. In various embodiments, the geometric shape of the lower portion 344 may be rectangular, elliptical, circular, or an irregular shape.

The damper mass 222 (and therefore the target 224) includes an equilibrium position relative to the wire coil 332 in which the central portion 336 of the wire coil 332 is located approximately opposite the tip 346 of the target 224. For example, in the equilibrium position the tip 346 may be located opposite any section of mounting surface that is within the central portion 336. The target 224 also includes end stop positions relative to the wire coil in which the outer wire 334 of the wire coil 332 is located approximately opposite the tip 346. For example, the first end stop position of the target 224 (as shown in FIG. 3, for example) may be an upper end stop position in which the target 224 extends away from a road surface on which the vehicle 100 is traveling until the target 224 is prevented from moving further away from the road surface in the direction of the arrow 229 (e.g., by a physical stop). The second end stop position of the target 224 (as shown in FIG. 4, for example) may be a lower end stop position in which the target 224 extends toward the road surface on which the vehicle 100 is traveling until the target 224 is prevented from moving further toward the road surface in the direction of the arrow 231 (e.g., by a physical stop). In some implementations, in the first or second end stop position the outer wire 334 is located approximately opposite the tip 346 of the target 224. Other arrangements of the equilibrium position of the target 224 relative to the wire coil 332 may also be implemented. For example, the equilibrium position of the target 224 may include a position in which a central portion of the lower portion 344 is location approximately opposite the central portion 336 of the wire coil 332 (e.g., a position similar to the position shown in FIG. 4). In some embodiments, a distance between the first end stop position and the second end stop position is approximately 50 millimeters (mm). For example, the distance between the first end stop position and the second end stop position may be between 45 and 55 mm, inclusive, between 40 and 60 mm, inclusive, or between 35 and 65 mm, inclusive.

In some implementations, the wire coil 332 is located opposite the target 224 and the inductance of the wire coil 332 is configured to change in response to movement of the target 224 relative to the wire coil 332. For example, the target 224 may have a magnetic field based on the material of the target 224. As the target 224 moves relative to the wire coil 332, the magnitude of the eddy currents on the target 224 changes, which induces a change in inductance of the wire coil 332.

The tip 346 is configured to move in a plane that is approximately parallel (e.g., within 10 degrees of being perfectly parallel) to a plane defined by the wire coil 332 and/or the mounting surface 330. The tip 346 is also configured to move in a plane that is approximately perpendicular (e.g., within 10 degrees of being perfectly perpendicular) to the direction of travel 114. In FIGS. 3-4, the direction of travel 114 is indicated as into the page. For instance, the wire coil 332 may extend around an axis such that the wire coil 332 (and therefore the mounting surface 330 to which the wire coil 332 is coupled) lies within a plane that is perpendicular to the axis. In some embodiments, as the tip 346 moves between the first end stop position and the second end stop position (e.g., from the position shown in FIG. 3 to the position shown in FIG. 4), a region of the lower portion 344 that is positioned opposite the wire coil 332 moves relative to the wire coil 332 and induces a change in inductance of the wire coil 332. More specifically, in the second end stop position the magnitude of the inductance of the wire coil 332 may be a minimum value, and in the first end stop position the magnitude of the inductance of the wire coil 332 may be a maximum value. Accordingly, the controller 112 may be configured to determine a position of the target 224 (and as a result, a position of the damper mass 222) relative to the wheel 110 based the signal generated by the position sensor 220 that is indicative of the inductance or change in the inductance of the wire coil 332. More specifically, the signal generated by the position sensor 220 may be based on a position of the geometric shape of the lower portion 344 relative to the position sensor 220. In addition, the controller 112 may be configured to determine a movement frequency of the target 224 (e.g., a rate of movement of the target 224 that may be expressed in Hertz) and, therefore, a movement frequency of the damper mass 222 based on the signal generated by the position sensor 220.

In some implementations, the signal generated by the position sensor 220 may also be indicative of a rate of change of inductance of the wire coil 332. Such a rate of change may be indicative of the velocity of the target 224 (and therefore the damper mass 222). Accordingly, the controller 112 may be configured to determine the velocity of the damper mass 222 relative to the wheel support 106 based on the signal. Furthermore, the signal generated by the position sensor 220 may be indicative of the acceleration of the damper mass 222 relative to the wheel support 106. In such implementations, the controller 112 may be configured to determine the acceleration of the damper mass 222 relative to the wheel support 106.

With reference to FIG. 2, based on the position, velocity, acceleration, and/or movement frequency of the target 224, motion of the wheel 110 may be limited. For example, when the target 224 reaches the first end stop or the second end stop, the damper mass 222 can no longer move to counteract motion of the wheel 110. In such cases, additional motion of the wheel 110 may be transferred to the active suspension system 104 via the wheel support 106, and occupants in the vehicle 100 may experience the additional motion of the wheel 110 as a bump, vibration, or other unexpected disturbance.

To limit or avoid disturbance to any occupants, the motion of the wheel 110 may be limited based on a position of the damper mass 222 relative to the wheel 110. In an example implementation, the motion of the wheel 110 may be limited after the target 224 reaches an end stop (e.g., the first end stop position or the second end stop position). For example, after the target 224 reaches an end stop, the active suspension component 108 may increase or decrease a stiffness of the active suspension system 104 according to the end stop reached by the target 224. In some implementations, the controller 112 may send a signal to the active suspension system 104 or the active suspension component 108, and the active suspension system 104 or the active suspension component 108 may perform a function based on the signal sent by the controller 112.

In some implementations, motion of the wheel 110 may be limited when the damper mass 222 (and the target 224) is within a threshold distance of an end stop position (e.g., the first end stop position, or the second end stop position). For example, when a distance between the damper mass 222 and an end stop (e.g., the threshold distance) is approximately 10% of the distance between the first end stop and the second end stop, motion of the wheel 110 may be limited. For example, the threshold distance may be 5-15% of the distance between the first end stop and the second end stop. As described, the active suspension system 104 may limit or prevent a disturbance to occupants in the cabin of the vehicle 100 when the damper mass 222 reaches an end stop.

As described, the magnitude of the inductance of the wire coil 332 is indicative of the position of the damper mass 222 (and the target 224). Accordingly, the end stop positions (e.g., the first end stop position and the second end stop position) are associated with certain values of inductance of the wire coil 332. As the inductance of the wire coil 332 approaches the inductance associated with the end stop positions, the motion of the wheel 110 may be limited when the inductance of the wire coil 332 is greater than an upper threshold value or less than a lower threshold value. In some implementations, the upper threshold value is associated with the first end stop position and the lower threshold value is associated with the second end stop position. For example, the motion of the wheel 110 may be limited when the inductance of the wire coil 332 is within 10% of the inductance associated with an end stop position of the damper mass 222. More specifically, the threshold value may be 5-15% of the inductance associated with an end stop position of the damper mass 222.

In some embodiments, the motion of the wheel 110 is limited when the damper mass 222 (and the target 224) does not move relative to the wheel 110 (e.g., when the inductance of the wire coil 332 is approximately constant). Such a scenario may arise if the damper mass 222 becomes inoperable and the damper mass 222 can no longer move relative to the wheel 110 (e.g., the damper mass 222 may be damaged, or debris may be caught between the target 224 and the position sensor 220 and prevent motion of the damper mass 222). In such scenarios, the damper mass 222 would be unable to counteract motion of the wheel 110, and the active suspension system 104 would increase or decrease the stiffness of the active suspension component 108 to account for the loss of function of the damper mass 222.

In some implementations, the motion of the wheel 110 may be limited based on a prediction that the damper mass will reach an end stop position. For example, based on the position, velocity, and/or acceleration of the damper mass 222, the controller 112 may determine (e.g., predict) that the damper mass 222 will reach an end stop. Rather than waiting until after the damper mass 222 reaches the end stop to take action, the stiffness of the active suspension component 108 may be increased or decreased based on the prediction. Furthermore, the active suspension system 104 may change a position of the wheel support 106 and/or the wheel 110 relative to a chassis of the vehicle 100 based on the prediction.

In some implementations, the motion of the wheel 110 is limited based on the velocity, acceleration, or movement frequency of the damper mass 222. For example, the damper mass 222 having a relatively high velocity and/or acceleration may indicate that the vehicle 100 encountered a large road disturbance (e.g., a pothole, a speed bump, etc.). The stiffness of the active suspension component 108 may be increased or decreased accordingly to limit or prevent occupants in the cabin of the vehicle 100 from experiencing the effects of large road disturbance as a bump, drop, vibration, etc., within the cabin of the vehicle 100.

In some implementations, the controller 112 may be configured to predict a force imparted to the tire 228 from a ground surface (e.g., the road surface). For example, the controller 112 may be in communication with various vehicle systems and may be configured to determine various forces acting on the wheel support 106 (e.g., forces attributable to a sprung mass including the chassis and body of the vehicle 100, forces attributable to movement of the wheel support 106, etc.). The various forces may form a kinematic chain from which the controller 112 can derive the force imparted to the tire 228 by the ground surface.

In addition to communicating with the active suspension system 104 based on signals received from the position sensor 220, the controller 112 may also communicate with the active suspension system 104 based on signals received from other portions of the vehicle 100. For example, the controller 112 may communicate with the active suspension system 104 based on a position sensor that indicates motion of a chassis relative to the wheel support 106.

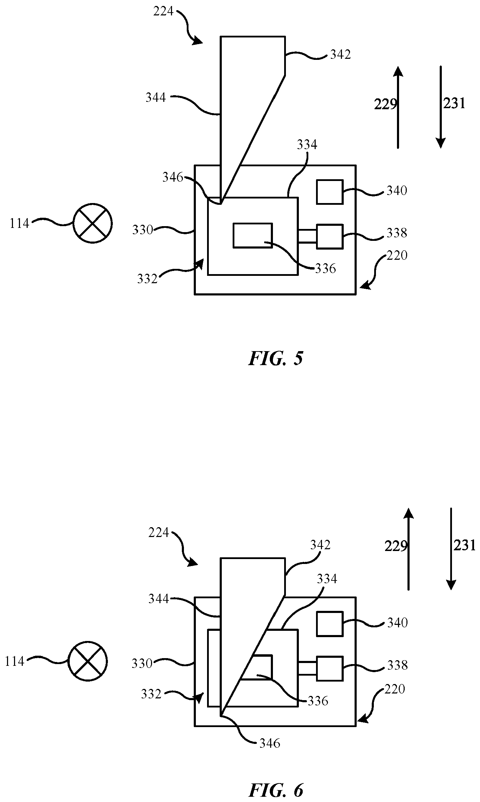

FIGS. 5-6 are illustrations of the position sensor 220 and another embodiment of the target 224. The target 224 and the position sensor 220 function as described with respect to FIGS. 3-4, with the only difference being the geometric shape of the lower portion 344. The lower portion 344 as shown in FIGS. 5-6 has a geometric shape of a right triangle. A right triangular shape of the portion 344 may reduce incidents of trapping debris between the target 224 and the position sensor 220 as compared to an isosceles triangle shape, thereby potentially making the target 224 with a right triangular shape more reliable.

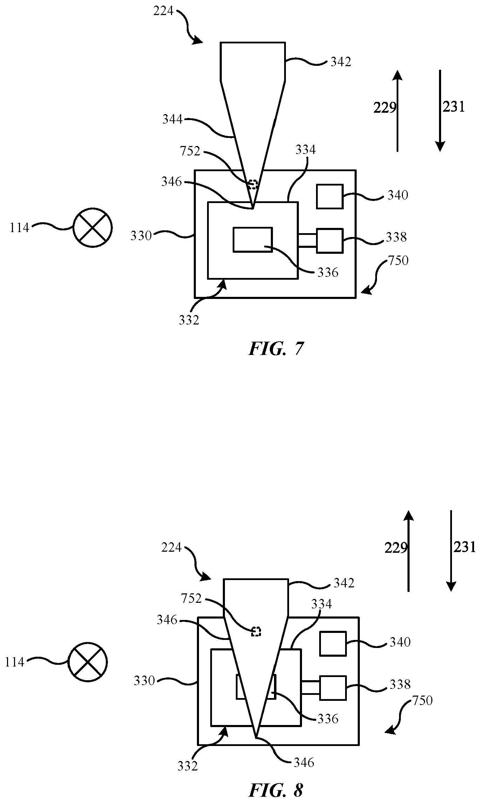

FIGS. 7-9 are illustrations of an embodiment of another position sensor 750. FIGS. 7-8 illustrate front views of the position sensor 750 with the target 224 in different locations. FIG. 7 is an illustration of the position sensor 750 with the target 224 at a first end stop position. FIG. 8 is an illustration of the position sensor 750 with the target 224 at a second end stop position. FIG. 9 illustrates a side view of the position sensor 750 and the target 224. The position sensor 750 is similar to the position sensor 220 and includes a gap sensor 752 that is configured to generate a signal based on a size of a gap "G" between the position sensor 750 and the target 224. In some instances, the gap G may increase or decrease based on factors such as temperature, humidity, and/or resonance of surrounding materials. A change in the gap G may affect the accuracy of the signals generated by the position sensor 220. For example, if the gap G decreases due to thermal expansion of components, the signal generated by the position sensor 220 may indicate an inaccurate position, velocity, and/or acceleration of the target 224. The controller 112 is configured to determine, based on the signal received from the position sensor 750, whether the position, velocity, and/or acceleration information indicated by the signal from the position sensor 220 should be adjusted. Using the above example, the controller 112 is configured to determine that the gap G is larger or smaller than expected and is configured to adjust the determinations of position, velocity, and acceleration of the target 224 accordingly.

FIG. 10 is an illustration of the controller 112 of the vehicle 100 of FIG. 1. The controller 112 may be used to implement the systems and methods disclosed herein. In some implementations, the controller 112 may be a separate controller, microprocessor, or microcontroller (e.g., not located in or on the vehicle 100), or may be implemented on the cloud. The controller 112 may also be part of an onboard vehicle controller. For example, the controller 112 may receive signals from the position sensor 220 and communicate with the active suspension system 104 and/or the active suspension component 108 in response to the signals. In an example hardware configuration, the controller 112 generally includes a processor 1060, a memory 1062, a storage 1064, and a communication interface 1066. Data and/or signals received from the position sensor 220 may include signals related to an inductance of the wire coil 332 or related to the gap between the position sensor 220 and the target 224. The processor 1060 may be any suitable processor, such as a central processing unit, for executing computer instructions and performing operations described thereby. The memory 1062 may be a volatile memory, such as random-access memory (RAM). The storage 1064 may be a non-volatile storage device, such as a hard disk drive (HDD) or a solid-state drive (SSD). The storage 1064 may form a computer readable medium that stores instructions (e.g., code) executed by the processor 1060 for operating external devices 1068 in the manners described above and below. The communication interface 1066 is in communication with, for example, the external devices 1068, the position sensor 220, the position sensor 750, and vehicle systems 1070 (e.g., the active suspension system 104) for sending to and receiving from various signals (e.g., control signals and/or notifications). The external devices 1068 may include, for example, systems or devices through which the occupant may provide information to the controller 112. For example, the external devices 668 may include devices such as a mobile device, a tablet computer, or other electronic devices that may communicate with the controller 112. Accordingly, the controller 112 may include an Internet connection to facilitate communication between the controller 112 and the external devices 1068.

Implementations described herein are related to a position sensing system that includes a wire coil coupled to a wheel support. The wheel support is coupled to a wheel of a vehicle and is located opposite a target. An inductance of the wire coil is configured to change in response to movement of the target relative to the wire coil, and a position of the target relative to the wheel support is determined based on the inductance of the wire coil.

In some implementations, the target includes a tip that is located at an end of the target and is configured to move in a plane that is approximately parallel to a plane defined by the wire coil.

In some implementations, a central portion of the wire coil is located approximately opposite a central portion of a lower portion of the target when the target is in an equilibrium position relative to the wire coil.

In some implementations, an outer wire of the wire coil is located approximately opposite a tip of the target when the target is in a first end stop position relative to the wire coil.

In some implementations, a motion of the wheel is limited after the target reaches an end stop.

In some implementations, the motion of the wheel is limited when the inductance of the wire coil is greater than an upper threshold value or less than a lower threshold value.

In some implementations, a motion of the wheel is limited when the inductance of the wire coil is approximately constant.

Implementations described herein are also related to a damper mass position sensing system that includes a damper mass coupled to a wheel support that is coupled to a vehicle. The damper mass is configured to move relative to the wheel support in response to movement of the wheel support. A sensor is coupled to the wheel support and is configured to generate a signal based on the movement of the damper mass relative to the wheel support. A position of the damper mass is determined based on the signal, and a motion of the wheel that is coupled to the wheel support is limited based on the position of the damper mass.

In some implementations, the damper mass includes a first end stop position and a second end stop position, and the motion of the wheel is limited when the damper mass is within a threshold distance of the first end stop position or the second end stop position.

In some implementations, a movement frequency of the damper mass is determined based on the signal, and the motion of the wheel is limited based on the movement frequency of the damper mass.

In some implementations, a velocity of the damper mass relative to the wheel support is determined based on the signal, and the motion of the wheel is limited based on the velocity of the damper mass relative to the wheel support.

In some implementations, an acceleration of the damper mass relative to the wheel support is determined based on the signal, and the motion of the wheel is limited based on the acceleration of the damper mass relative to the wheel support.

In some implementations, the damper mass is coupled to a target has a geometric shape, and the signal is based on a position of the geometric shape relative to the sensor.

In some implementations, a force imparted to a tire from a ground surface is predicted based on the signal.

Implementations described herein are also related to an active suspension system that includes a wheel support coupled to a wheel of a vehicle. An active suspension component is coupled to the wheel support, and a damper mass is coupled to the wheel support and is configured to move relative to the wheel support in response to movement of the wheel support. Motion of the wheel is limited based on a position of the damper mass relative to the wheel.

In some implementations, the damper mass includes a first end stop position and a second end stop position, and the motion of the wheel is limited when the damper mass is within a threshold distance of the first end stop position or the second end stop position.

In some implementations, the motion of the wheel is limited when the damper mass does not move relative to the wheel.

In some implementations, the damper mass includes a first end stop position and a second end stop position, and the motion of the wheel is limited when the damper mass reaches the first end stop position or the second end stop position.

In some implementations, the motion of the wheel is limited based on a prediction that the damper mass will reach an end stop position. The motion of the wheel may also be limited after the damper mass reaches the end stop position.

As described above, one aspect of the present technology is the gathering and use of data available from various sources for use in determining a position of a damper mass relative to a wheel support coupled to an active suspension system. As an example, such data may identify the user and include user-specific settings or preferences. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, a user profile may be established that stores user preference related information that allows adjustment of an active suspension system according to user preferences. Accordingly, use of such personal information data enhances the user's experience.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of storing a user profile for the active suspension system, the present technology can be configured to allow users to select to "opt in" or "opt out" of participation in the collection of personal information data during registration for services or anytime thereafter. In another example, users can select not to provide data regarding usage of specific applications. In yet another example, users can select to limit the length of time that application usage data is maintained or entirely prohibit the development of an application usage profile. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data at a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data. For example, user preference information may be determined each time the position sensing system is used, such as by manually entering the user preference information, and without subsequently storing the information or associating with the particular user.

## Claims

1. An active suspension system, comprising:
a wheel support coupled to a wheel of a vehicle;
an active suspension component coupled to the wheel support; and
a damper mass coupled to the wheel support and configured to move relative to the wheel support in response to movement of the wheel support,
wherein a motion of the wheel is limited based on a position of the damper mass relative to the wheel.

2. The active suspension system of claim 1, wherein the damper mass includes a first end stop position and a second end stop position, and the motion of the wheel is limited when the damper mass is within a threshold distance of the first end stop position or the second end stop position.

3. The active suspension system of claim 1, wherein the motion of the wheel is limited when the damper mass does not move relative to the wheel.

4. The active suspension system of claim 1, wherein the damper mass includes a first end stop position and a second end stop position, and the motion of the wheel is limited when the damper mass reaches the first end stop position or the second end stop position.

5. The active suspension system of claim 1, wherein the motion of the wheel is limited based on a prediction that the damper mass will reach an end stop position.

6. The active suspension system of claim 5, wherein the motion of the wheel is limited after the damper mass reaches the end stop position.

7. The active suspension system of claim 1, further comprising:
a target coupled to the damper mass and configured to move with the damper mass; and
a wire coil coupled to the wheel support and located opposite the target,
wherein an inductance of the wire coil is configured to change in response to movement of the target relative to the wire coil, and a position of the target relative to the wheel support is determined based on the inductance of the wire coil.

8. The active suspension system of claim 7, wherein the target includes a tip that is located at an end of the target and is configured to move in a plane that is approximately parallel to a plane defined by the wire coil.

9. The active suspension system of any of claims 7 or 8, wherein a central portion of the wire coil is located approximately opposite a central portion of a lower portion of the target when the target is in an equilibrium position relative to the wire coil.

10. The active suspension system of any of claims 7 to 9, wherein an outer wire of the wire coil is located approximately opposite a tip of the target when the target is in a first end stop position relative to the wire coil.

11. The active suspension system of claim 10, wherein the outer wire of the wire coil is located approximately opposite a tip of the target with the target is in a second end stop position relative to the wire coil.

12. The active suspension system of claim 11, wherein the inductance of the wire coil is at a maximum value with the target at the first end stop position and the inductance of the wire coil is at a minimum value with the target at the second end stop position.

13. The active suspension system of any of claims 7 to 12, wherein a motion of the wheel is limited after the target reaches an end stop.

14. The active suspension system of claim 13, wherein the motion of the wheel is limited when the inductance of the wire coil is greater than an upper threshold value or less than a lower threshold value.

15. The active suspension system of any of claims 7 to 12, wherein a motion of the wheel is limited when the inductance of the wire coil is approximately constant.
